# EUROPEAN PATENT SPECIFICATION

(11) **EP 1 790 310 B1**
(45) Date of publication and mention of the grant of the patent: **06.05.2009**
(21) Application number: 06254569.4
(22) Date of filing: 01.09.2006
(51) Int. Cl.: A61C 8/00

(54) **Orthodontic bone screw**
Orthodontische Knochenschraube
Vis orthodontique pour os

(30) Priority: 28.11.2005 US 287673
(43) Date of publication of application: 30.05.2007
(73) Proprietor: ACE Surgical Supply Co., Inc., Brockton, MA 02303 (US)
(72) Inventor: Balfour, Alan R., Petaluma Sonoma, CA (US); Machata, William C., Kohler Sheboygan, WI (US); Caruso, Joseph M., Redlands San Bernardino, CA (US); Carchidi, Joseph Edward, West Bridgewater Plymouth, MA (US)
(74) Representative: Nettleton, John Victor

(56) References cited:
- EP-A- 1 582 174
- EP-A2- 1 535 586
- WO-A-97/06930
- US-A- 5 025 688
- US-A1- 2002 127 510
- US-A1- 2005 019 730
- US-A1- 2005 065 525
- US-B1- 6 655 962
- US-B1- 6 669 473

## Description

### Field of the Invention

This invention relates generally to orthodontic treatments and more particularly to a bone screw for use in intra-oral orthodontic corrections.

### Background of the Invention

Presently, a variety of bone screws are commercially available for use for orthodontic anchorage; however, many of these screws generally are intended for retaining tissue grafts and bone plates and to assist in the purpose of craniomaxillofacial reconstruction rather than for use as an orthodontic fixation post. Since such screw geometries were not intended for orthodontic use, they have several limitations relative to such use.

Many bone screws that are available at the present time require one to first perform a soft tissue dissection in the area that the screw will be inserted, then to drill a pilot hole at the desired location for screw insertion. This multiple step surgical procedure for preparation to insert the screws is not only cumbersome, but also it requires skills that are not usually performed by an orthodontist. In addition, by following this procedure, the orthodontist must relocate the predrilled pilot hole in order to insert the self-threading bone screw. Since most of these surgical procedures require small diameter bone screws, relocating the pilot hole prior to insertion of the bone screw can be difficult. Once inserted, these defined screws are typically under an immediate and continuous load incident to the use as an orthodontic anchor, which typically is not a design criterion of the passive retentive maxillofacial bone screw. In general, these maxillofacial screws were developed for the purpose of lag screw retention to hold multiple bone segments together in a passive loading condition, rather than that as a stand alone screw to be used for immediate orthodontic anchorage and multi-axis loading. Yet another limitation is that many maxillofacial reconstructive screws do not incorporate a desired fixation post head for orthodontic appliance attachment; in general these screws are used subgingivally and require a low profile head in order to prevent soft tissue irritation.

US 6 669 473 B1, on which the preamble of claim 1 is based, discloses an anchor screw to the palatal vault for orthodontic correction treatments comprising: a lower threaded portion adapted to be screwed to the bone; a substantially cylindrical central portion protruding from the bone and the gum adapted to allow anchorage of traction and/or thrust orthodontic devices; an upper portion provided with movement means to screw and unscrew the screw. The central portion has a reduced diameter zone in comparison with the diameter of the cylindrical portion and at least a hole for the passage of orthodontic devices such as round and/or rectangular/square wires.

### Summary of the Invention

An object of the present invention is to provide an improved intra-oral craniomaxillofacial rigid fixation screw post for primary anchorage of orthodontic appliances. Another object of the invention is the provision of an orthodontic screw that overcomes the limitations noted above of using maxillofacial reconstruction bone screws for the purpose of orthodontic post anchorage and immediate multi-axis post loading. Yet another object of the invention is the provision of an orthodontic bone screw that can easily pierce and penetrate through the soft tissue and directly into the host bone without the surgical requirements for soft tissue dissection or pre-drilling of a pilot hole. Still another object of the invention is the provision of an orthodontic screw that will enable an orthodontist to insert the screw with the self-piercing and penetrating tip and self tapping locking threads in a single minimally invasive surgical operation. Another object of the invention is the provision of an orthodontic bone screw that once it is rigidly inserted into the host bone, standard orthodontic appliances can be attached to the exposed driving head of the screw. Another object of the invention is the provision of an orthodontic bone screw that does not permanently integrate with the host bone thereby allowing for removal at the completion of orthodontic treatment.

The present invention provides an orthodontic skeletal anchorage bone screw according to claim 1.

The above and other objects of the invention will be apparent from the following description taken with reference to the accompanying drawings.

Briefly stated, an orthodontic, skeletal anchorage bone screw made in accordance with a preferred embodiment of the invention incorporates a sharp tissue piercing, pinpoint, tack tip in series with an immediate loading, self-locking, double tapered fixation thread. Distal to the tip and body of the bone screw is a generally cylindrical, dome shaped head that incorporates features for the attachment of standard orthodontic appliances. In use, an orthodontist can easily attach the anchorage bone screw head onto a spline driver tool and insert the screw into the host bone in a single operation. Since the screw is designed for easy insertion without the requirements for soft tissue dissection or a pre-drilled pilot hole preparation, it is particularly beneficial for an orthodontist who may not be trained in dissection procedures. If desired, the screw thread, such as the uppermost portion thereof, can include suitable surface texturing to enhance functional stability. After the double, self-locking, tapered thread is rigidly fixated into the bone with the one-step surgical procedure, immediate attachment of a standard orthodontic appliance can occur. The invention allows an orthodontist to take advantage of the intra-oral anchorage post for orthodontic movement of the surrounding teeth. Further, the screw provides an orthodontist with a cost effective, completely patient compliant, functional alternative to extra oral orthodontic procedures.

### Brief Description of the Drawings

For a more complete understanding of the present invention and further advantages thereof, reference is now made to the following detailed description of the preferred embodiment taken in conjunction with the drawings in which:
Fig. 1 is an elevational view of a self-positioning and self-starting orthodontic post fixation bone screw made in accordance with a preferred embodiment of the invention;
Fig. 1(a) is an elevational view of a modification of the Fig. 1 bone screw;
Fig. 2 is a top plan view of the Fig. 1 structure;
Fig. 3 is an elevational view of a delivery and driver tool for the Fig. 1 screw;
Fig. 4 is similar to Fig. 3 but shows a detachable insert driver tip 28, a push-off driver sleeve 36 and an oversized driver handle 29 separated from one another other;
Fig. 5 is a broken away, enlarged tip portion of driver tip 28 of Figs 3 and 4; and
Fig. 6 is a top plan view of the Fig. 5 tip 28.

### Detailed Description of the Preferred Embodiments

References made in the specification and claims to a particular orientation, such as upper, bottom and the like are made with respect to the orientation as shown in the drawings.

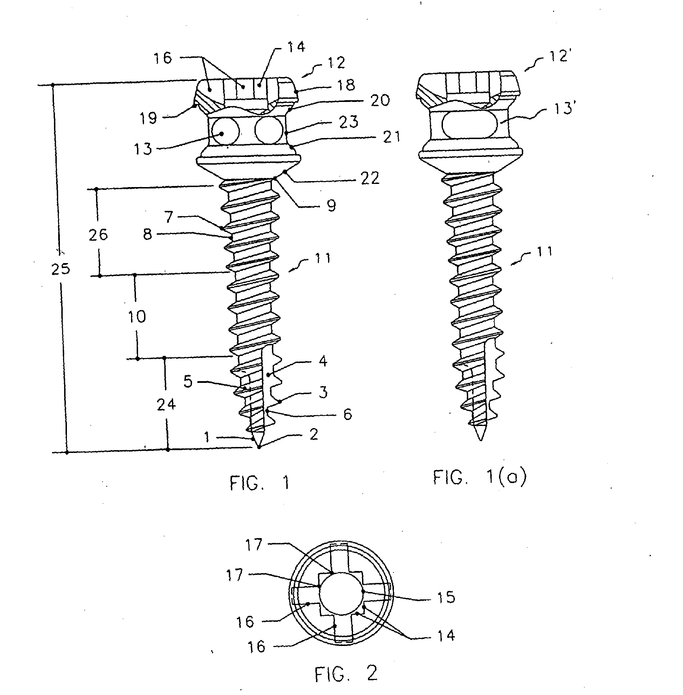

As shown in Fig. 1, the self-positioning and self-starting orthodontic bone screw of the preferred embodiment of the invention comprises an apical screw end 1 having a sharp tissue piercing pin-point tack tip 2 and an immediate loading, self-locking, double tapered threaded body 11. Distal to apical end 1 and threaded body 11 is a cylindrical, generally domed shaped driving head 12 that incorporates attachment features for orthodontic appliances. The pin-point tack tip 2 is used to locate, pierce and penetrate through the soft tissue as well as maintain a positional location in the host bone preventing the need for soft tissue dissection. Once pin-point tack tip 2 locates and tacks onto the host bone, the screw is rotated clockwise to immediately engage the apical cutting flutes 4 and 5 of the gradually increasing diameter bottom tapered fixation thread 24. As designed, the cutting flutes 4 and 5, which are located rotationally 180 degrees apart from each other, vary in length to assist in the self-tapping of the screw without jeopardizing the structural characteristics of the thread.

Going from the apical end of threaded body 11, a first axial length portion 24 comprises a tapered thread having increasing minor 6 and major 3 thread diameters followed by a second axial length portion 10 of a constant (minor and major) thread diameter. The length of second axial length portion 10 varies in dependence on the overall length of bone screw 25. A third axial length portion 26 of a tapered (increasing minor 8 and major 7) thread diameter is formed adjacent to the second axial length portion 10. The tapered thread of axial length portion 26, with its increasing thread diameter, rigidly locks into the bone as the screw is driven in to seating neck 22, to be discussed.
By means of the double, self-locking emergence tapered thread, the screw can be easily inserted while maximizing crestal bone fixation. The coronal portion of the upper tapered thread geometry 26 finishes at the major diameter thread dimension 9 flush with the apical portion of seating neck 22, to be discussed, without any minor diameter thread relief geometry, to enhance the torsional strength characteristics of the screw. The screw, with its unique pin-point 2 and double, self-locking, tapered thread geometry 11, allows an orthodontist to easily and rigidly fixate the screw into a surgical site in a one-step procedure without the requirement for any soft tissue dissection. If desired, the screw thread, particularly the third axial length portion 26, can include suitable surface texturing to enhance functional stability.

The coronal end of the self-positioning and self-starting orthodontic bone screw 25 incorporates a generally cylindrical dome shaped driving head 12 that acts as an anchorage post for the attachment of standard orthodontic appliances. Central to the dome shaped head 12 are two symmetrically located cross-holes 13 that can be utilized for orthodontic wire attachment and multi-axis loading. It will be realized that, if desired, one or more other forms of openings could be provided, such as slot 13' shown in Fig. 1(a). In addition, the central area 23, which constitutes a circumferentially extending annular recess, incorporates symmetrical undercut grooves 20, 21, respectively, that can be used for orthodontic band attachment. Finally, this grooved area 23 has an upper snap attachment configuration 19 comprising a generally right angle circumferential shoulder formed in the upper surface adjacent to groove 20 that allows for the attachment and use of a variety of orthodontic appliances to provide tooth movement.

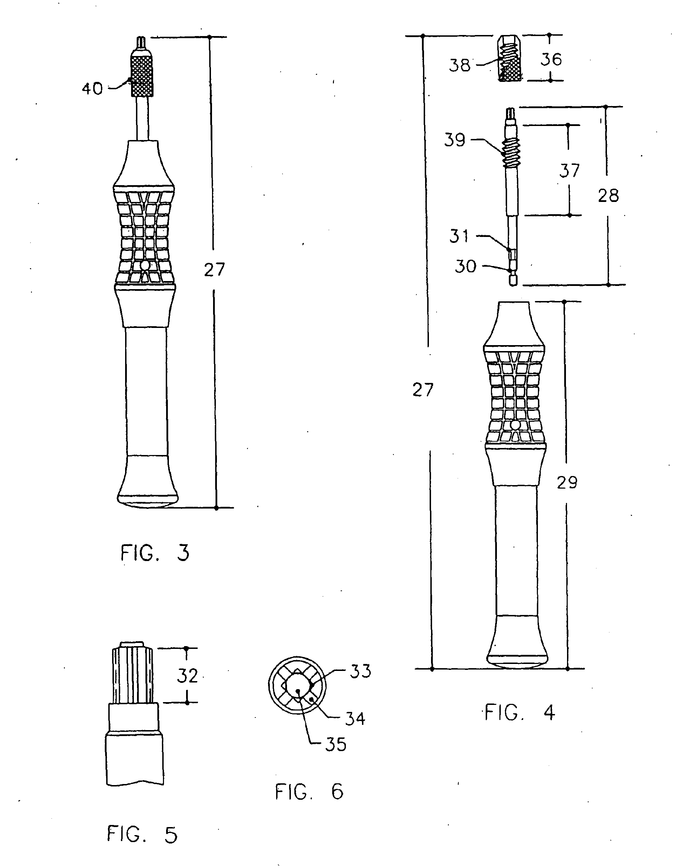

On the bottom side of the bone screw head 12 is a beveled seating neck 22 that acts as a seating surface when the screw is placed perpendicular to the surface of the bone or off-axis to some pre-determined angle as determined by an orthodontist. Opposite beveled seating neck 22 is a tissue compatible, smooth, cylindrical dome shaped surface 18. In the center of dome shaped surface 18 is a combined square recess 14 and cross-slots 16, providing a spline 17. This combined square and cross-slot spline is used to drive bone screw 25 in or out of the surgical site with a corresponding square block and cross-rib spline pick-up and driver tool 27. Distal to the internal features used for driving the screw is a recessed bored hole 15 used to pick up and deliver bone screw 25 to the surgical site using the corresponding tapered cylindrical tip spline pick-up and driver tool of Figs. 3-6.

As noted above, to deliver orthodontic screw 25 to the host bone site, Figs. 3-6 show a press-fit pick-up and delivery spline driver tool 27. Driver tool 27 comprises a detachable insert driver tip 28 and an oversized driver handle 29. Detachable insert driver tip 28 is connected and driven by oversized handle 29 and has an insert ring 30 and centrally disposed milled male hexagonal feature 31. Disposed at the opposite end of driver tip 28 from the connecting and driving features 30, 31, is a bone screw spline driver head 32, see Figs. 5 and 6. Male spline driver head 32 comprises a combined male square block 33 and cross-bars 34. Distal to spline driver head 32 is a tapered cylindrical shaft tip 35 of increasing diameter as one goes in a direction away from the free end thereof that friction locks into the corresponding recessed bore 15 in bone screw 25 so that it can be easily picked up and delivered by the dentist or orthodontist to the surgical site to prevent any risk of contamination.

Once bone screw 25 is inserted into and seated in the host bone, driver tip 28 can be easily detached from dome shaped driving head 12 of the bone screw by using a push-off driver sleeve 36. This is achieved by turning knurled surface 40 of push-off driver sleeve 36 on shaft 37 in a clockwise direction to axially slide driver sleeve 36 downward until it hits and pushes off of driver head 12 of the bone screw. The axial downward push-off force, which pushes off bone screw head 12, is generated by translating the rotational female thread 38 force on the driver sleeve 36 to the mating male thread 39 on driver shaft 37.

Spline drive head 32 can also be incorporated into a contra-angle driver (not shown) to allow for electrical driver insertion of screw 25.

Although the invention has been described with regards to a specific preferred embodiment thereof, variations and modifications will become apparent to those of ordinary skill in the art.

## Claims

1. An orthodontic skeletal anchorage bone screw comprising:
a generally cylindrical body (11) having opposite coronal and apical (1) ends,
a generally cylindrical driving head (12) at the coronal end, a pin-point tip (2) at the apical end (1), and
a fixation bone thread (10, 24, 26) formed on the body (11) intermediate to the driving head (12) and the pin-point tip (2), the generally cylindrical driving head (12) having a coronal end surface formed with recessed driving features (14, 16) and an apical beveled seating surface (22) joining the third axial length portion (26), a circumferentially extending annular recess (23) formed intermediate to the coronal end surface and the apical beveled seating surface (22) and at least one radially extending opening (13) through the head (12) in alignment with the annular recess (23), **characterized in that:**
the bone thread (10, 24, 26) has:
a first axial length portion (24) contiguous with the tip (2) formed with tapered thread gradually increasing in outer diameter in a direction from the apical end (1) to the coronal end,
at least one cutting flute (4, 5) in the first axial length portion (24) immediately adjacent to the tip (1),
a second axial length portion (10) adjacent to the first axial length portion (24), the second axial length portion (10) having a continuing thread with a constant thread diameter, and
a third axial length portion (26) adjacent to the second axial length portion (10), the third axial length portion (26) having a self-locking thread configuration with increasing outer diameter in the said direction.

2. An orthodontic screw according to claim 1, in which the fixation bone thread (10, 24, 26) on the body (11) is a double thread.

3. An orthodontic bone screw according to claim 1, in which an opening is formed, diametrically through the cylindrical head (12) in alignment with the annular recess (23) .

4. An orthodontic bone screw according to claim 1, in which a radially extending slot (13') is formed through the head (12) in alignment with the annular recess (23).

5. An orthodontic screw according to claim 1, in which two radially extending holes (13) are formed through the head (12) in alignment with the annular recess (23).

6. An orthodontic screw according to claim 1, in which a polygonal recess (14), as seen in end view, and diametrically extending cross grooves (16) are formed in the coronal end surface of the driving head (12).

7. An orthodontic screw according to claim 6, further comprising a cylindrical bored surface (15) extending centrally and axially from the polygonal recess (14).

8. An orthodontic screw according to claim 1, further comprising a snap-on, generally right angle peripheral shoulder (19) formed on the upper surface defining the annular recess (23).

9. An orthodontic screw according to claim 7 and a driver tool (27) for driving the said screw, the driver tool (27) having a tip end (28) formed with a block (33) shaped as a polygon in end view having side walls, ribs (34) extending from selected side walls of the block (33) and a centrally located cylindrical, tapered projection (35) extending axially beyond the block (33), the block (33), ribs and projection sized to ft in the respective polygonal recess (14), cross grooves (16) and cylindrical bored surface (15) of the screw.

10. An orthodontic screw and a driver tool according to claim 9, the driver tool (27) further comprising a push-off mechanism (36, 37, 38, 39) to separate the driver tool (27) from a bone screw to which it has been engaged for mounting in the host bone.

11. An orthodontic screw and a driver tool according to claim 10, in which the push-off mechanism includes a threaded shaft (37) on which the tip end (28) is formed and a push-off driver sleeve (36) having an internal thread (38) is threadingly engaged to the thread (39) on the threaded shaft (37), the push-off driver sleeve (36), upon rotation thereof, being engageable with the head of a bone screw to which the tip end (28) is engaged, the push-off driver sleeve (36), upon further rotation, adapted to exert a force against the head (12) of the bone screw to move the tip end (28) out of engagement with the bone screw.

## Patentansprüche

1. Orthodontische-Skelettverankerung-Knochenschraube, welche enthält:
einen im Allgemeinen zylindrischen Körper (11), welcher ein gegenüberliegendes koronales und apikales (1) Ende hat,
einen im Allgemeinen zylindrischen Treibkopf (12) an dem koronalen Ende, eine Stiftpunktspitze (2) an dem apikalen Ende (1), und
ein Fixierungs-Knochengewinde (10, 24, 26), welches an dem Körper (11) zwischen dem Treibkopf (12) und der Stiftpunktspitze (2) ausgebildet ist, wobei der im Allgemeinen zylindrische Treibkopf (12) eine koronale Endfläche, welche mit ausgesparten Antriebsmerkmalen (14, 16) ausgebildet ist, und eine apikale konische Sitzfläche (22), welche mit dem dritten axialen Längsabschnitt (26) in Verbindung ist, eine sich umlaufend erstreckende ringförmige Aussparung (23), welche zwischen der koronalen Endfläche und der apikalen konischen Sitzfläche (22) ausgebildet ist, und zumindest eine sich radial erstreckende Öffnung (13) durch den Kopf (12) in Ausrichtung zu der ringförmigen Aussparung (23) hat, **dadurch gekennzeichnet, dass:**
das Knochengewinde (10, 24, 26) enthält:
einen ersten axialen Längsabschnitt (24), welcher an der Spitze (2) angrenzt, welcher mit einem konischen Gewinde ausgebildet ist, welches im Außendurchmesser in einer Richtung von dem apikalen Ende (1) zu dem koronalen Ende graduell zunimmt,
zumindest eine Schneidkehle (4, 5) im ersten axialen Längsabschnitt (24), unmittelbar angrenzend zu der Spitze (1),
einen zweiten axialen Längsabschnitt (10), angrenzend zu dem ersten axialen Längsabschnitt (24), wobei der zweite axiale Längsabschnitt (10) ein durchgängiges Gewinde mit einem konstanten Gewindedurchmesser hat, und
einen dritten axialen Längsabschnitt (26), angrenzend zu dem zweiten axialen Längsabschnitt (10), wobei der dritte axiale Längsabschnitt (26) einen selbstsichernden Gewindeaufbau mit einem in diese Richtung zunehmenden Außendurchmesser hat.

2. Orthodontische Schraube nach Anspruch 1, bei welcher das Fixierungs-Knochengewinde (10, 24, 26) an dem Körper (11) ein Doppelgewinde ist.

3. Orthodontische Knochenschraube nach Anspruch 1, bei welcher eine Öffnung diametral durch den zylindrischen Kopf (12) in Ausrichtung zu der ringförmigen Aussparung (23) ausgebildet ist.

4. Orthodontische Knochenschraube nach Anspruch 1, bei welcher ein sich radial erstreckender Schlitz (13') durch den Kopf (12) in Ausrichtung zu der ringförmigen Aussparung (23) ausgebildet ist.

5. Orthodontische Schraube nach Anspruch 1, bei welcher zwei sich radial erstreckende Löcher (13) durch den Kopf (12) in Ausrichtung zu der ringförmigen Aussparung (23) ausgebildet sind.

6. Orthodontische Schraube nach Anspruch 1, bei welcher eine polygonale Aussparung (14), von einer Endansicht aus betrachtet, und sich diametral erstreckende Kreuznuten (16) in der koronalen Endfläche von dem Treibkopf (12) ausgebildet sind.

7. Orthodontische Schraube nach Anspruch 6, welche ferner eine zylindrisch gebohrte Oberfläche (15) enthält, welche sich mittig und axial von der polygonalen Aussparung (14) erstreckt.

8. Orthodontische Schraube nach Anspruch 1, welche ferner eine Schnappverbindung enthält, welche im Allgemeinen eine rechtwinklige periphere Schulter (19) ist, welche auf der oberen Fläche ausgebildet ist, welche die ringförmige Aussparung (23) bestimmt.

9. Orthodontische Schraube nach Anspruch 7 und ein Antriebswerkzeug (27) zum Antreiben der Schraube, wobei das Antriebswerkzeug (27) ein Spitzenende (28), welches mit einem Block (33) ausgebildet ist, welcher, in einer Endansicht aus betrachtet, wie ein Polygon ausgebildet ist, welches Seitenwände hat, Rippen (34), welche sich von ausgewählten Seitenwänden von dem Block (33) aus erstrecken, und einen mittig angeordneten, zylindrisch konischen Vorsprung (35), welcher sich axial über den Block (33) hinweg erstreckt, enthält, wobei der Block (33), die Rippen und der Vorsprung derart bemessen sind, dass sie jeweils in die polygonale Aussparung (14), Kreuznuten (16) und zylindrisch gebohrte Oberfläche (15) von der Schraube passen.

10. Orthodontische Schraube und Antriebswerkzeug nach Anspruch 9, wobei das Antriebswerkzeug (27) ferner einen Abschiebe-Mechanismus (36, 37, 38, 39) enthält, um das Antriebswerkzeug (27) von einer Knochenschraube zu trennen, mit welcher es zur Befestigung in den Hauptknochen in Eingriff gebracht wurde.

11. Orthodontische Schraube und Antriebswerkzeug nach Anspruch 10, wobei der Abschiebe-Mechanismus einen Gewindeschaft (37), auf welchem das Spitzenende (28) ausgebildet ist, enthält, und wobei eine Abschiebe-Antriebshülse (36), welche ein Innengewinde (38) hat, gewindemäßig mit dem Gewinde (39) auf dem Gewindeschaft (37) in Eingriff gebracht ist, wobei die Abschiebe-Antriebshülse (36), nach einer Umdrehung derer, mit dem Kopf von einer Knochenschraube in Eingriff bringbar ist, mit welcher das Spitzenende (28) in Eingriff steht, wobei die Abschiebe-Antriebshülse (36), nach einer weiteren Umdrehung, dazu ausgelegt ist, eine Kraft gegen den Kopf (12) von der Knochenschraube auszuüben, um das Spitzenende (28) aus der Ineingriffnahme mit der Knochenschraube zu bewegen.

## Revendications

1. Vis orthodontique d'ancrage osseux squelettique comprenant :
un corps généralement cylindrique (11) ayant des extrémités coronale et apicale (1) opposées,
une tête de vissage généralement cylindrique (12) à l'extrémité coronale, un bout pointu (2) à l'extrémité apicale (1), et
un filetage de fixation osseuse (10, 24, 26) formé sur le corps (11) entre la tête de vissage (12) et le bout pointu (2), la tête de vissage généralement cylindrique (12) ayant une surface d'extrémité coronale formée de prises de vissage évidées (14, 16) et une surface d'appui apicale biseautée (22) reliant la troisième partie de longueur axiale (26), un évidement annulaire s'étendant circonférentiellement (23) formé entre la surface d'extrémité coronale et la surface d'appui biseautée apicale (22) et au moins une ouverture s'étendant radialement (13) à travers la tête (12) en alignement avec l'évidement annulaire (23), **caractérisée en ce que** :
le filetage pour os (10, 24, 26) possède :
une première partie de longueur axiale (24) contiguë au bout (2) formée d'un filetage conique augmentant graduellement en diamètre extérieur dans une direction de l'extrémité apicale (1) à l'extrémité coronale,
au moins une cannelure de coupe (4, 5) dans la première partie de longueur axiale (24) immédiatement adjacente au bout (1),
une deuxième partie de longueur axiale (10) adjacente à la première partie de longueur axiale (24), la deuxième partie de longueur axiale (10) ayant un filetage continu avec un diamètre de filetage constant, et
une troisième partie de longueur axiale (26) adjacente à la deuxième partie de longueur axiale (10), la troisième partie de longueur axiale (26) ayant une configuration de filetage d'autoblocage avec un diamètre extérieur augmentant dans ladite direction.

2. Vis orthodontique selon la revendication 1, dans laquelle le filetage de fixation osseuse (10, 24, 26) sur le corps (11) est un filetage double.

3. Vis orthodontique pour os selon la revendication 1, dans laquelle une ouverture est formée, diamétralement à travers la tête cylindrique (12) en alignement avec l'évidement annulaire (23).

4. Vis orthodontique pour os selon la revendication 1, dans laquelle une fente s'étendant radialement (13') est formée à travers la tête (12) en alignement avec l'évidement annulaire (23).

5. Vis orthodontique selon la revendication 1, dans laquelle deux trous s'étendant radialement (13) sont formés à travers la tête (12) en alignement avec l'évidement annulaire (23).

6. Vis orthodontique selon la revendication 1, dans laquelle un évidement polygonal (14), vu dans une vue d'extrémité, et des rainures transversales s'étendant diamétralement (16) sont formés dans la surface d'extrémité coronale de la tête de vissage (12).

7. Vis orthodontique selon la revendication 6, comprenant en outre une surface alésée cylindrique (15) s'étendant centralement et axialement à partir de l'évidement polygonal (14).

8. Vis orthodontique selon la revendication 1, comprenant en outre un épaulement périphérique généralement à angle droit encliquetable (19) formé sur la surface supérieure définissant l'évidement annulaire (23).

9. Vis orthodontique selon la revendication 7 et outil de vissage (27) pour visser ladite vis, l'outil de vissage (27) ayant un embout (28) formé d'un bloc (33) en forme de polygone dans une vue d'extrémité ayant des parois latérales, des nervures (34) s'étendant depuis les parois latérales sélectionnées du bloc (33) et une saillie conique, cylindrique, située au centre (35) s'étendant axialement au-delà du bloc (33), le bloc (33), les nervures et la saillie étant dimensionnés pour s'adapter à l'évidement polygonal (14), aux rainures transversales (16) et à la surface alésée cylindrique (15) respectives de la vis.

10. Vis orthodontique et outil de vissage selon la revendication 9, l'outil de vissage (27) comprenant en outre un mécanisme de poussée (36, 37, 38, 39) pour séparer l'outil de vissage (27) d'une vis pour os avec laquelle il a été mis en prise pour un montage dans l'os hôte.

11. Vis orthodontique et outil de vissage selon la revendication 10, dans lesquels le mécanisme de poussée comprend une tige filetée (37) sur laquelle l'embout (28) est formé et une douille de poussée de vissage (36) ayant un filetage intérieur (38) est mise en prise de manière filetée au filetage (39) sur la tige filetée (37), la douille de poussée de vissage (36), lors de sa rotation, étant capable d'être mise en prise avec la tête d'une vis pour os avec laquelle l'embout (28) est mis en prise, la douille de poussée de vissage (36), lors d'une rotation supplémentaire, étant adaptée pour exercer une force contre la tête (12) de la vis pour os pour déplacer l'embout (28) pour que celui-ci ne soit plus en prise avec la vis pour os.
